# EUROPEAN PATENT SPECIFICATION

(11) **EP 4 414 909 B1**
(45) Date of publication and mention of the grant of the patent: **08.07.2026**
(21) Application number: 23215372.6
(22) Date of filing: 08.12.2023
(51) Int. Cl.: G06Q 10/06, G06Q 10/20, G06Q 30/0601, G07C 5/08

(54) **VEHICLE SERVICING**
FAHRZEUGWARTUNG
ENTRETIEN DE VÉHICULE

(30) Priority: 09.02.2023 US 202318166981
(43) Date of publication of application: 14.08.2024
(73) Proprietor: BlackBerry Limited, Waterloo, Ontario N2K 0A7 (CA)
(72) Inventor: ADAMS, Neil Patrick, Waterloo, N2K 0A7 (CA); KOMINAR, Jeremy Lawson, Waterloo, N2K 0A7 (CA)
(74) Representative: Murgitroyd & Company

(56) References cited:
- WO-A2-2012/075055
- US-A1- 2013 338 873
- US-A1- 2022 252 411

## Description

### Background

A vehicle can include various components, such as parts that can wear out over time, be damaged, or otherwise have to be replaced or serviced after some amount of use. Examples of parts include brake pads or rotors, tires, windshield wiper blades, filters, engine components, transmission components, and so forth. Vehicle components can also include fluids that may be consumed during operation of the vehicle, or that may have to be replaced. Examples of fluids include engine oil, transmission oil, brake fluid, engine coolant, windshield wiper fluid, and so forth. When vehicle components are to be replaced or serviced, vehicle operators can purchase replacement components and/or take their vehicles to vehicle service facilities.
WO 2012/075055 A2 relates to a system for obtaining pricing for vehicle services. US 2022/0252411 A1 relates to a system that collects data regarding a vehicle from a user.

### Summary

Accordingly there is provided a method as provided in the independent claims. Advantageous features are in the dependent claims. The method is preferably a computer implemented method. Also provided is a computer program which, when executed on at least one processor of a computing device, is configured to cause the computing device to carry out the method.

### Brief Description of the Drawings

Some implementations of the present disclosure are described with respect to the following figures.
FIG. 1 is a block diagram of an example arrangement that includes vehicles, vehicle service facilities, and a predictive service presentation engine according to some implementations of the present disclosure.
Fig. 2 is a flow diagram of a predictive service presentation process according to some implementations of the present disclosure.
FIG. 3 is a block diagram of an example arrangement that includes vehicles, component suppliers, and a predictive component provision engine according to some further implementations of the present disclosure.
FIG. 4 is a flow diagram of a predictive component process according to some examples.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### Detailed Description

Examples of vehicles include motor vehicles (e.g., automobiles, cars, trucks, buses, motorcycles, etc.), aircraft (e.g., airplanes, unmanned aerial vehicles, unmanned aircraft systems, drones, helicopters, etc.), spacecraft (e.g., space planes, space shuttles, space capsules, space stations, satellites, rockets, etc.), watercraft (e.g., ships, boats, hovercraft, submarines, etc.), railed vehicles (e.g., trains and trams, etc.), bicycles and other types of vehicles including any combinations of any of the foregoing, whether currently existing or after arising.

A vehicle can include various physical sensors to measure different aspects of the vehicle. Examples of physical sensors of a vehicle can include any or some combination of the following: a speedometer that measures a speed of the vehicle, an accelerometer that measures an acceleration of the vehicle, a vehicle fluid level sensor to measure a fluid level in the vehicle, a vehicle fluid condition sensor to measure a condition of a fluid, a tire pressure sensor to measure a pressure of a tire, a temperature sensor, a pressure sensor, a humidity sensor, an engine speed sensor, a wear sensor to measure wear on a part (e.g., a brake pad or rotor, a tire, an engine component, a transmission component, etc.), a sensor to measure a rate of fluid flow through a filter in the vehicle, and/or any other sensors.

Sensors may also include synthetic sensors, which are implemented as programs (machine-readable instructions) that are able to collect information about operations of the vehicle. A synthetic sensor in some cases can obtain measurement data acquired by one or more physical sensors, and produce an output (e.g., a prediction that a vehicle may have to be serviced) based on the measurement data.

An in-vehicle software platform can be included in a vehicle, and the in-vehicle software platform can acquire various vehicle information, including sensor data (collected by physical sensors and/or synthetic sensors). The in-vehicle software platform is able to store and send the vehicle information to a remote service that is external of the vehicle. The remote service can reside in the cloud, on a server, or at another location. The in-vehicle software platform is able to communicate with the remote service over a network, which can be a wireless network and/or a wired network.

Traditionally, when a vehicle is to be serviced, a vehicle operator takes the vehicle to a vehicle service facility to perform the service. The vehicle operator may manually call different vehicle service facilities to determine availability of the vehicle service facilities, determine whether the vehicle service facilities are able to perform the desired vehicle service, and obtain price quotes. The vehicle operator can then decide which vehicle repair facility to use.

Such manual contact of vehicle service facilities by the vehicle operator is tedious and time consuming. Also, the vehicle operator may miss cost savings opportunities associated with a vehicle service if the vehicle operator is not aware of lower priced alternatives (e.g., discounts, sales, etc.) available from some vehicle service facilities. Also, vehicle service facilities may not be provided with opportunities to win business by presenting service information with terms that are attractive to customers. Additionally, the vehicle service facility selected by the vehicle operator may have slow turnaround times which may result the vehicle service taking longer than desired.

In further examples, vehicle components (including parts and/or fluids) may not be available due to supply chain issues. As a result, the vehicle operator may experience a delay in obtaining a replacement vehicle component, and the vehicle operator may not be able to use the vehicle while waiting for the replacement vehicle component to become available.

In accordance with some implementations of the present disclosure, a predictive service presentation engine and/or a predictive component provision engine can be provided to enhance vehicle operator experience associated with servicing vehicle components. Servicing a vehicle component can refer to repairing the vehicle component, replacing the vehicle component, replenishing the vehicle component, or otherwise performing an action with respect to the vehicle component that addresses an issue associated with the vehicle component.

As used here, an "engine" can refer to a hardware processing circuit, which can include any or some combination of a microprocessor, a core of a multi-core microprocessor, a microcontroller, a programmable integrated circuit, a programmable gate array, or another hardware processing circuit. Alternatively, an "engine" can refer to a combination of a hardware processing circuit and machine-readable instructions (software and/or firmware) executable on the hardware processing circuit.

In some examples of the present disclosure, the predictive service presentation engine is able to receive vehicle component information indicating one or more components of a vehicle to be serviced, and determine, based on the vehicle component information and service facility information relating to multiple vehicle service facilities, at least one vehicle service facility that is able to perform servicing of the one or more components. The predictive service presentation engine can cause presentation, in a user interface, of service information relating to vehicle component servicing to be provided by the at least one vehicle service facility. The service information also identifies vehicle component(s) that are to be serviced based on analysis of sensor data. The predictive service presentation engine allows vehicle service facilities to present, to a vehicle operator, information regarding vehicle services offered by the vehicle service facilities, so that the vehicle operator can be presented with price information (including discounts or sales), information regarding available time slots when the vehicle operator can bring their vehicle to each vehicle service facility, expected turnaround times to complete the vehicle service, and/or other information. Based on the presented information, the vehicle operator can select a vehicle service facility, from among multiple vehicle service facilities, to use for servicing the vehicle.

In further examples of the present disclosure, the predictive component provision engine can receive component information from sensors in one or more vehicles relating to the predicted replacement dates for respective components of the one or more vehicles. The predictive component provision engine can add the component information to an information repository, which can allow for a determination of when replacement components are to be provided by component suppliers.

### PREDICTIVE SERVICE PRESENTATION

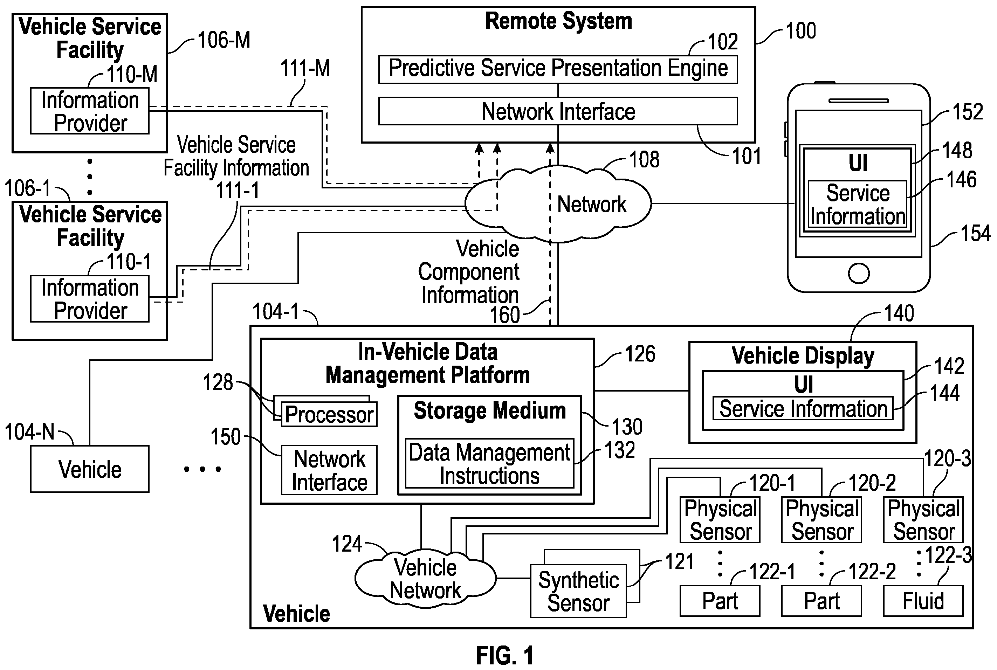

FIG. 1 is a block diagram of an example arrangement that includes a predictive service presentation engine 102 according to some implementations of the present disclosure, vehicles 104-1 to 104-N (N ≥ 1), and service facilities 106-1 to 106-M (M ≥ 1).

As used here, a "vehicle service facility" refers to any entity that is able to service a vehicle to repair, replace, replenish, or otherwise perform an action with respect to one or more components of a vehicle to address an issue associated with the vehicle.

In some examples, the predictive service presentation engine 102 is part of a remote system 100, which can be implemented with one or more computers. The remote system 100 is remote from the vehicles 104-1 to 104-N. In some examples, the remote system 100 is a cloud system that allows the predictive service presentation engine 102 to be deployed in a cloud. In other examples, the remote system 100 can include one or more server computers.

The predictive service presentation engine 102 is coupled over a network 108 to the vehicles 104-1 to 104-N and vehicle service facility information providers 110-1 to 110-M of the respective vehicle service facilities 106-1 to 106-M. Each vehicle service facility information provider can be implemented using one or more computers associated with the corresponding vehicle service facility.

The remote system 100 includes a network interface 101 through which the predictive service presentation engine 102 is able to communicate with the network 108. A "network interface" can include a physical network interface controller as well as any protocol layers that manage the communications of data according to communication protocols, such as the Media Access Control (MAC) protocol, the Internet Protocol (IP), and so forth.

In some examples, the network 108 can include a wireless network, such as a cellular network, a wireless local area network (WLAN), or another type of wireless network. Alternatively, or additionally, the network 108 can include a wired network.

A "vehicle service facility information provider" refers to a system, which can be implemented using one or more computers, that is able to provide vehicle service facility information relating to a corresponding vehicle service facility. As depicted in FIG. 1, each vehicle service facility information provider 110-1 to 110-M provides respective vehicle service facility information 111-1 to 111-M to the predictive service presentation engine 102 over the network 108.

Vehicle service facility information can include information of vehicle servicing capabilities of the vehicle service facility. A vehicle servicing capability of a vehicle service facility refers to what types of services the vehicle service facility can perform (e.g., engine rebuild, brake repair, transmission repair, tire replacement, etc.), the types of vehicles (e.g., vehicle makes and models) that the vehicle service facility can service, and any other information that indicates what the vehicle service facility can or cannot do with respect to vehicles.

In further examples, vehicle service facility information also includes bidding strategy information of the corresponding vehicle service facility relating to presentation of service information. Bidding strategy information can include keywords (relating to vehicle components) that are to be matched for presentations of service information of a vehicle service facility, one or more bidding rules regarding under what conditions service information relating to vehicle component servicing is to be presented for the vehicle service facility, bid fees that the vehicle service facility is willing to spend (and pay to the operator of the predictive service presentation engine 102) for each presentation of the service information to a user, and so forth.

The vehicle 104-1 includes various sensors, including physical sensors 120-1, 120-2, and 120-3. Although 3 physical sensors are depicted in FIG. 1, in other examples, less than 3 or more than 3 physical sensors can be provided.

The physical sensor 120-1 collects measurement data regarding a vehicle part 122-1, the physical sensor 120-2 collects measurement data regarding a vehicle part 122-2, and the physical sensor 120-3 collects measurement data regarding a fluid 122-3 in the vehicle 104-1. In some cases, a physical sensor can collect measurement data regarding multiple parts and/or multiple fluids, or alternatively, multiple physical sensors can be used to collect measurement data about a given vehicle part or vehicle fluid.

The sensors of the vehicle 104-1 further include one or more synthetic sensors 121. The synthetic sensors 121 are implemented with machine-readable instructions and can collect data relating to operations of various portions of the vehicle 104-1. A synthetic sensor in some cases can obtain measurement data acquired by one or more physical sensors, and produce an output (e.g., a prediction that a vehicle may have to be serviced) based on the measurement data.

The physical sensors 120-1 to 120-3 and the synthetic sensor(s) 121 are coupled over a vehicle network 124 to an in-vehicle management platform 126, which manages data for the vehicle 104-1. For example, the in-vehicle management platform 126 can transmit and/or receive data relating to the vehicle 104-1, store data relating to the vehicle 104-1, perform analysis of data relating to the vehicle 104-1, and so forth. As examples, the in-vehicle management platform 126 can transmit sensor data or any other data collected at the vehicle 104-1 to an entity that is external of the vehicle 104-1, such as the predictive service presentation engine 102.

The vehicle network 124 can include a wireless network such as a WLAN, a BLUETOOTH network, or another type of wireless network. Alternatively or additionally, the vehicle network 124 can include a wired network.

The in-vehicle data management platform 126 includes one or more processors 128 and a storage medium 130 that stores machine-readable instructions, including data management instructions 132, that are executable on the one or more processors 128 to perform tasks of the in-vehicle data management platform 126. For example, data management instructions 132 are executable to receive data from the sensors (120-1 to 120-3, 121), and provide such sensor data through a network interface 150 of the in-vehicle data management platform 126 over the network 108 to the predictive service presentation engine 102.

A processor can include a microprocessor, a core of a multi-core microprocessor, a microcontroller, a programmable integrated circuit, a programmable gate array, or another hardware processing circuit. A storage medium can be implemented with one or more storage devices, such as disk-based storage devices, solid-state drives, and/or memory devices.

More generally, the data management instructions 132 of the in-vehicle data management platform 126 are able to provide vehicle component information 160 to the predictive service presentation engine 102. The vehicle component information 160 can include sensor data from the sensors 120-1 to 120-3 and 121 and/or component data regarding one or more components that are to be serviced. The component data can identify one or more components to be serviced (e.g., part numbers, etc.), a condition of each component to be serviced, vehicle make and model, and so forth. The component data can be determined by the data management instructions 132 (or a different program of the in-vehicle data management platform 126) based on analysis of sensor data by the data management instructions 132. For example, based on sensor data, the data management instructions 132 (or a different program such as a synthetic sensor) can predict that a component is to be serviced, such as based on wear and tear of the component, damage on the component detected by a sensor, a faulty operation of the component detected by a sensor, a low level of a fluid detected by a sensor, a fluid having a characteristic as detected by a sensor indicating that the fluid should be replaced (e.g., dirty engine oil, a fluid becoming too viscous, etc.), or a rate at which the component is deteriorating. Additionally, the data management instructions 132 (or a different program) can predict that one or more components are to be serviced in response to detecting an event, such as a collision involving the vehicle 104-1.

In some examples, the vehicle component information 160 can further include a date at which the vehicle component information 160 was generated, a location of the vehicle 104-1, and so forth. Personal identifying information of users may be omitted from the vehicle component information 160 to protect the privacy of the users.

The vehicle 104-1 includes a vehicle display 140 that is able to display a user interface (UI) 142 (e.g., a graphical user interface or GUI) to present various information to a vehicle operator. For example, the UI 142 can present service information 144 relating to servicing of vehicle components to be provided by one or more vehicle service facilities (e.g., any or some combination of 106-1 to 106-M). As examples, the service information 144 includes information identifying vehicle component(s) to be serviced, what servicing should be performed, available vehicle service facilities, price information (including discounts or sales) offered by the available vehicle service facilities, information regarding available time slots when the vehicle operator can bring their vehicle to each vehicle service facility, expected turnaround times to complete the vehicle service, and/or other information.

The presentation of service information 144 in the UI 142 of the vehicle display 140 can be controlled by the data management instructions 132 of the in-vehicle data management platform 126, for example. The in-vehicle data management platform 126 can receive the service information to be presented from the predictive service presentation engine 102.

The vehicle 104-N can include a similar arrangement of elements as the vehicle 104-1.

Alternatively or additionally, the predictive service presentation engine 102 can control the presentation of service information 146 in a UI 148 presented in a display 152 of an electronic device 154 associated with a user, such as the vehicle operator of the vehicle 104-1. The electronic device 154 can include a smartphone, a tablet computer, a notebook computer, a wearable electronic device (e.g., a smart watch, smart eyeglasses, virtual reality or augmented reality goggles, etc.), or any other type of electronic device. The service information 146 can be similar to the service information 144 presented in the UI 142 of the vehicle display 140.

In some examples, the UI 142 in the vehicle display 140 or the UI 148 in the display 152 of the electronic device 154 can be a UI provided by the predictive service presentation engine 102 (e.g., the format and design of the UI is controlled by the predictive service presentation engine 102). In other examples, the UI 142 or 148 may be part of a social media UI as provided by any of various social media websites or applications.

As noted above, vehicle service facility information providers 110-1 to 110-M can provide vehicle service facility information 111-1 to 111-M, respectively, to the predictive service presentation engine 102. Each vehicle service facility information can include vehicle servicing capabilities of each vehicle service facility and bidding strategy information of each vehicle service facility relating, where the bidding strategy information can include any or some combination of: keywords relating to vehicle components that are to be matched for presentations of service information of a vehicle service facility, one or more bidding rules, bid fees that a vehicle service facility is willing to spend (and pay to the operator of the predictive service presentation engine 102), and so forth. The predictive service presentation engine 102 can identify, based on the bidding strategy information of the vehicle service facilities, which of the vehicle service facilities is to be selected for presentation of service information in a UI.

The keywords relating to vehicle components in the bidding strategy information are keywords can be compared to vehicle component information indicating one or more components to be serviced. If the keywords in the bidding strategy information are matched to corresponding words in the vehicle component information, then that indicates that the vehicle service facility offers services relating to the one or more components to be serviced. If the keywords in the bidding strategy information are not matched to any words in the vehicle component information, then that indicates that the vehicle service facility does not offer or is not interested in offering services relating to the one or more components to be serviced, and thus the predictive service presentation engine 102 should not present service information for the vehicle service facility.

A bidding rule in the bidding strategy information can control under what conditions service information relating to vehicle component servicing is to be presented for a vehicle service facility. For example, a bidding rule can specify that service information relating to vehicle component servicing is to be presented during a time or date range, at specified geographic locations (e.g., specific cities, states, neighborhoods, etc.), for specific types (makes and models) of vehicles, for specific vehicle components (e.g., a vehicle service facility wishes to present service information for replacement of tires but not for repair of brakes), and so forth. More generally, a bidding rule can specify information of which vehicle components a respective vehicle service facility has selected for presentation of service information.

Bid fees that a vehicle service facility is willing to spend for presentations of service information can control if and in what order the service information of the vehicle service facility is to presented relative to service information of other vehicle service facilities. For example, if vehicle service facility A is willing to pay a higher bid fee for its service information than vehicle service facility B, then the vehicle service facility may be presented higher is a list of service information presented in the UI 142 or 148. As another example, if vehicle service facilities A, B, and C are willing to pay higher bid fees for their service information than vehicle service facility D, then the service information of vehicle service facility D may be omitted from being displayed in the UI 142 or 148.

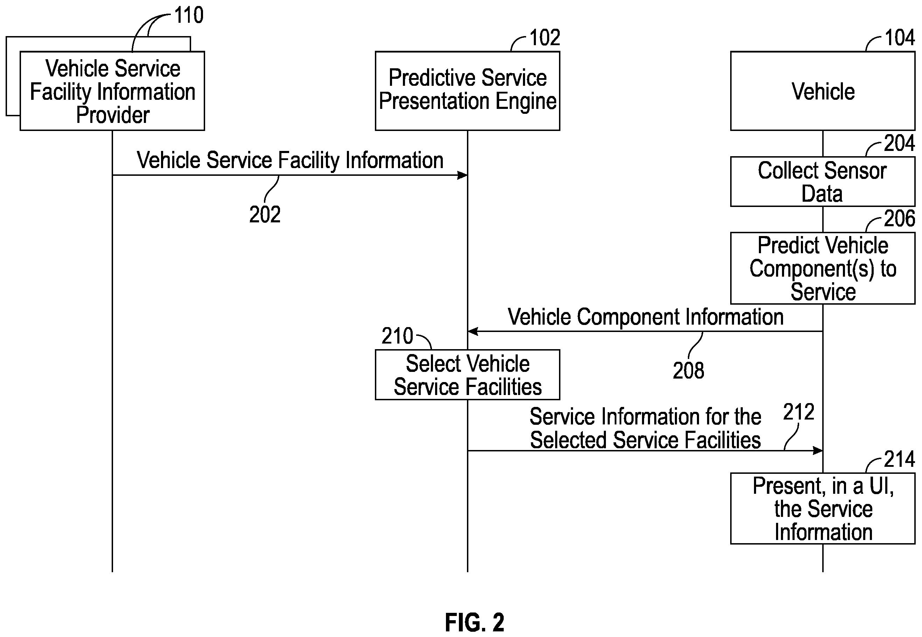

FIG. 2 is a flow diagram of a process that can be performed by various entities, including vehicle service facility information providers 110 (some combination of 110-1 to 110-M in FIG. 1), the predictive service presentation engine 102, and a vehicle 104 (any of vehicles 104-1 to 104-N in FIG. 1).

The vehicle service facility information providers 110 can transmit (at 202) vehicle service facility information (e.g., some combination of 111-1 to 111-N of FIG. 1) to the predictive service presentation engine 102. As noted above, the vehicle service facility information can include vehicle service capabilities of a vehicle service facility and bidding strategy information of the vehicle service facility.

The vehicle 104 collects (at 204) sensor data acquired by various sensors (e.g., 120-1 to 120-3, 121) of the vehicle 104. The vehicle can make a prediction (at 206) regarding one or more vehicle components that are to be serviced, based on the sensor data. The prediction can be performed by the in-vehicle data management platform 126 or a synthetic sensor 121, for example.

The in-vehicle data management platform 126 in the vehicle 104 can transmit (at 208) vehicle component information (including sensor data and/or component data as explained further above) to the predictive service presentation engine 102.

Based on the vehicle component information and the vehicle service facility information from each vehicle service facility information provider 110, the predictive service presentation engine 102 can select (at 210) which of the vehicle service facilities the predictive service presentation engine 102 is to provide service information for. For example, based on comparing the vehicle component information to keywords in the bidding strategy information from each vehicle service facility information provider 110, and based on bidding rules and bid fees in the bidding strategy information, the predictive service presentation engine 102 can select (at 210) a subset of the vehicle service facilities.

The predictive service presentation engine 102 transmits (at 212), to the vehicle 104, service information for the selected subset of vehicle service facilities. In response to the received service information, the in-vehicle data management platform 126 presents (at 214), in a UI (e.g., 142 or 148 in FIG. 1), the service information.

The service information presented in the UI can include user interactive elements that can be selected by a user, such as the vehicle operator of the vehicle 104 or another user. The user can touch the user interactive element on a touchscreen (a touchscreen input), for example, or can use another type of user input device (e.g., a mouse device or a pointer device) to select the interactive element in the UI. Service information associated with different vehicle service facilities can contain respective user interactive elements. The user can select one of the user interactive elements to obtain further information regarding a corresponding vehicle service facility.

In response to a user selection of a particular user interactive element, further information pertaining to the corresponding vehicle service facility can be presented in the UI, such as in a pop-up window of the UI. The further information for the corresponding vehicle service facility can include contact information such as a phone number or an email address, website information, a coupon code if a discount is offered, details regarding services offered by the corresponding vehicle service facility, and so forth.

In accordance with some examples of the present disclosure, once the user has selected, in the UI, a vehicle service facility to use (after reviewing the presented service information for multiple vehicle service facilities), the UI can present a scheduling interface to allow the user to schedule a service appointment with the user-selected vehicle service facility. The in-vehicle data management platform 126 can receive, based on user entry in the UI, scheduling information relating to scheduling a service for the vehicle, and can communicate the scheduling information to a computer of the selected vehicle service facility. In this manner, the user would not have to separately call or otherwise contact the user-selected vehicle service facility to make a service appointment. Additionally, as part of scheduling the service appointment, the user can also choose to share, through the UI, specific service requirements with the user-selected vehicle service facility. The service requirements can include information pertaining to the component(s) that is (are) to be serviced. The service requirements can include information provided by the in-vehicle data management platform 126. This makes it simpler for the user, since the user would not have to manually provide a description of the service desired, and instead can simply include information provided by the in-vehicle data management platform 126 that relates to the service to be performed. Additionally, the user can specify if the user wishes a ride home or to work after dropping off the vehicle at the service facility. The in-vehicle data management platform 126 can communicate information relating to the servicing of one or more vehicle components to a computer of the selected vehicle service facility, without user manual entry, as part of making the service appointment. In some examples, the user can choose, through the UI, that certain information in the vehicle not be shared, such as an audio and/or video recording and/or other information.

In further examples, the predictive service presentation engine 102 can identify, based on the vehicle component information from the vehicle 104, services to be performed for multiple different vehicle components for different issues. The predictive service presentation engine 102 can present service information for the multiple different vehicle components so that the user can schedule a single service appointment to service the multiple different vehicle components for different issues. By being able to schedule a single service appointment at a vehicle service facility to address multiple issues of the vehicle 104, the user would not have to make multiple service appointments with potentially different vehicle service facilities, which is inconvenient and wastes the user's time.

The predictive service presentation engine 102 when selecting vehicle service facilities (at 210) can prioritize vehicle service facilities that are able to service the multiple different vehicle components. For example, if the multiple different vehicle components to be serviced include the tires and the brakes of the vehicle 104, the predictive service presentation engine 102 would prioritize vehicle service facilities that are able to service both tires and brakes, and would be less likely to pick a vehicle service facility (such as a tire retailer) that is unable to service brakes. More generally, the predictive service presentation engine 102 can select vehicle service facilities based on an objective that seeks to combine multiple services into a single service visit.

### PREDICTIVE COMPONENT PROVISIONING'

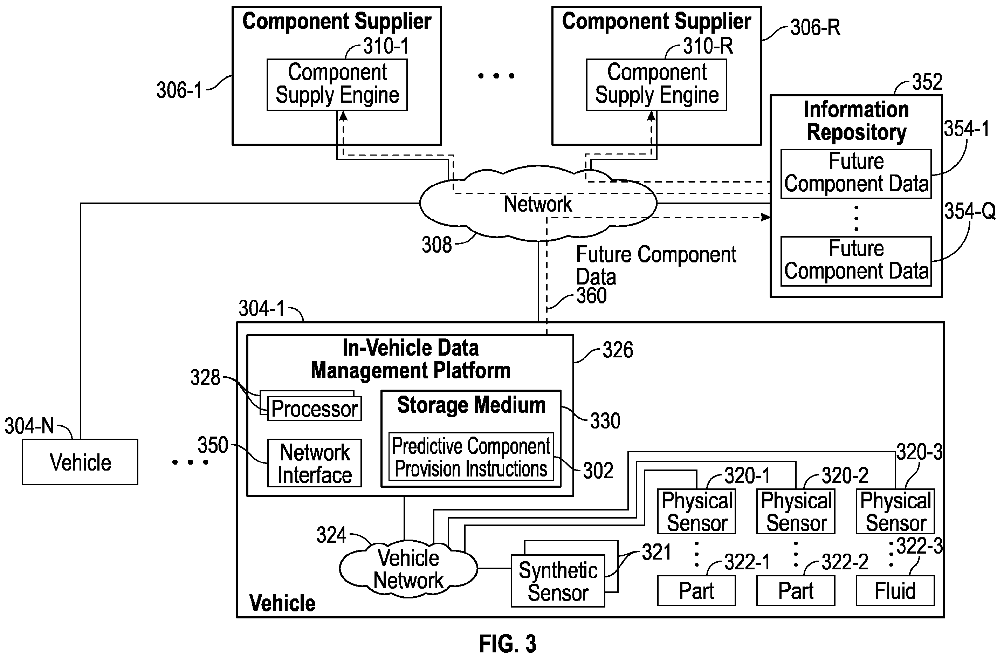

FIG. 3 is a block diagram of an example arrangement according to further implementations of the present disclosure. The arrangement of FIG. 3 includes vehicles 304-1 to 304-N. Elements of the vehicle 304-1 are shown in FIG. 3. Other vehicles, including the vehicle 304-N, can include similar elements.

The vehicle 304-1 includes an in-vehicle data management platform 326 in which predictive component provision instructions 302 are executable. The predictive component provision instructions 302 are stored in a storage medium 330 of the in-vehicle data management platform 326. The in-vehicle data management platform 326 also includes one or more processors 328 and a network interface 350. The predictive component provision instructions 302 are executable on the one or more processors 328.

The in-vehicle data management platform 326 is connected over a vehicle network 324 to physical sensors 320-1, 320-2, and 320-3, and one or more synthetic sensors 321. Although a specific quantity of sensors are shown in FIG. 3, in other examples, fewer or more sensors can be included in the vehicle 304-1.

The physical sensor 320-1 collects measurement data regarding a vehicle part 322-1, the physical sensor 320-2 collects measurement data regarding a vehicle part 322-2, and the physical sensor 320-3 collects measurement data regarding a fluid 322-3 in the vehicle 302-1.

The vehicles 304-1 to 304-N are connected over a network 308 to component supply engines 310-1 to 310-R (R ≥ 1). The component supply engines 310-1 to 310-R are associated with respective component suppliers 306-1 to 306-R. A "component supplier" can refer to an entity that is to supply a vehicle component (a vehicle part or a vehicle fluid) to a distribution point, such as a retail outlet, a service repair facility, a distribution center, and so forth. A "component supply engine" can acquire information regarding the predicted demand for vehicle components, and can produce outputs that allow for timely distribution of the vehicle components to meet the predicted demand.

The predictive component provision instructions 302 are executable in the in-vehicle data management platform 326 to upload future component data 360 to an information repository 352. The information repository 352 can include a data storage structure stored in one or more storage devices. For example, the information repository 352 can be in the form of a relational database or another type of the data storage structure. The information repository 352 is connected to the network 308, and the future component data 360 is uploaded from the vehicle 304-1 over the network 308 to the information repository 352.

"Future component data" can refer to data that predicts an estimated demand for a vehicle component at a future point in time (referred to as "future demand for a vehicle component"). The future component data can include any or some combination of the following information: vehicle make and model of a vehicle in which the vehicle component is to be provided, vehicle trim (a version of the vehicle), an identifier of the vehicle component (e.g., part number), a current condition of the vehicle component, an estimated date at which the vehicle component is to be added to the vehicle, a location of the vehicle, and so forth. The current condition of the vehicle component can refer to a level of wear of a vehicle part (e.g., a percentage wear of a tire or a brake pad or rotor or any other vehicle part), an amount of usage of the vehicle component (e.g., amount of time used), a current level of a fluid, a property of the fluid, whether the vehicle component has broken down or suffered damage, whether the vehicle in which the vehicle component is provided was involved in a collision, and so forth.

The location of the vehicle included in the future component data can refer to a city, a neighborhood, or any other geographic region. The location of the vehicle can be used to determine where the future demand for a vehicle component is expected.

Instances of future component data 354-1 to 354-Q (Q ≥ 1) can be stored in the information repository 352. Each instance of the future component data 354-m (m = 1 to Q) is uploaded by the predictive component provision instructions 302 to the information repository 352 for storage. The future component data 354-1 to 354-Q may be uploaded by predictive component provision instructions 302 executed in multiple vehicles, including 304-1 to 304-N.

The future component data 360 provided by the predictive component provision instructions 302 is based on a prediction in the vehicle 304-1 of when a vehicle component should be provided to the vehicle 304-1, where the vehicle component is to replace another vehicle component or is otherwise added to the vehicle 304-1. The prediction of when the vehicle component should be provided to the vehicle 304-1 is based on data provided by sensors in the vehicle 304-1. In some examples, the prediction can be made by the predictive component provision instructions 302 based on data from one or more physical sensors and/or synthetic sensors. In other examples, the prediction can be performed by a synthetic sensor 321 based on sensor data from one or more physical sensors.

Each component supply engine 310-j (j = 1 to R) can retrieve selected future component data from the information repository 352. Different component suppliers may be interested in different vehicle components. For example, a tire supplier may be interested in future component data that relates to tires, while a brake supplier may be interested in future component data relating to brakes. Each component supply engine 310-j retrieves filtered data that includes future component data that relates to one or more vehicle components of interest to the respective component supplier. For example, if the information repository 352 is a relational database, then a component supply engine 310-j can issue a database query with a predicate that specifies the component type(s) of interest. In some cases, the query can also include a time period or a geographical area to retrieve future component data for that time period or area.

In other examples, the future component data 360 uploaded by the predictive component provision instructions 302 to the information repository 352 can include a current mileage of the vehicle 304-1. Certain maintenance actions are to be performed at specific mileage points, so that a component supplier (e.g., a supplier of engine oil) can predict when a vehicle component would be used at a future time point.

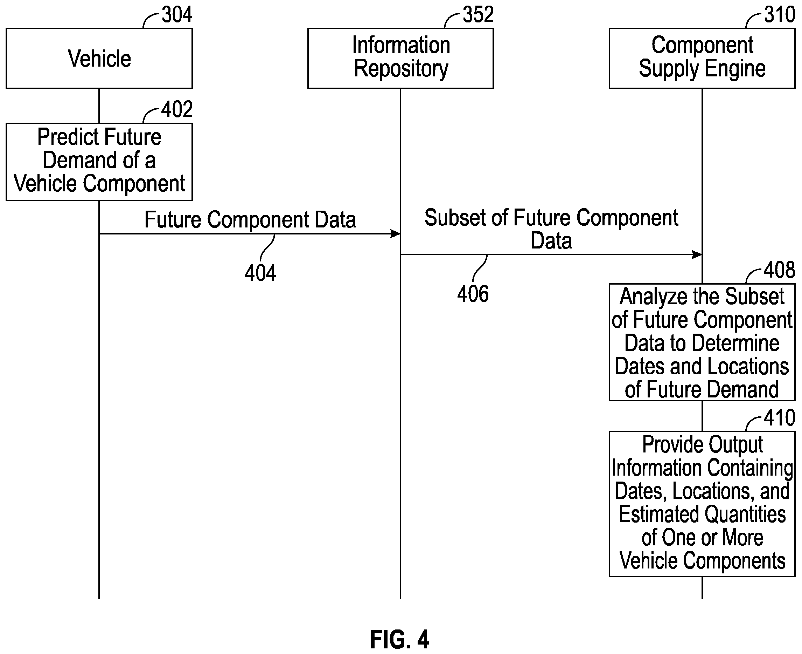

FIG. 4 is a flow diagram of a process performed by various entities of FIG. 3. Based on a prediction of future demand (at 402) of a vehicle component performed in a vehicle 304 (any of the vehicle 304-1 to 304-N in FIG. 3), the predictive component provision instructions 302 in the vehicle 304 uploads (at 404) future component data to the information repository 352. As noted above, the prediction of future demand of the vehicle component can be made by the predictive component provision instructions 302 or by a synthetic sensor 321 or by both.

A component supplier engine 310 (any of the component supply engines at 310-1 to 310-R of FIG. 3) can access the information repository 352 to retrieve (at 406) a subset of the future component data 354-1 to 354-Q relating to component type(s) of interest to the component supply engine 310-j. For example, a tire supplier engine can access the information repository 352, by using a query, to retrieve a subset of the future component data 354-1 to 354-Q that relates to tires according to a specific tire type.

The component supply engine 310 can analyze (at 408) the retrieved subset of future component data to determine dates, locations, and estimated quantities of future demand for one or more vehicle components. Based on the analysis, the component supply engine 310 can provide (at 410) output information (e.g., in the form of a report containing dates, locations, and estimated quantities of the one or more vehicle components) to the corresponding component supplier (e.g., a corresponding one of the component suppliers 306-1 to 306-R). Based on the output information, the corresponding component supplier can plan for a distribution of the one or more vehicle components to meet demand at the dates and locations of the future demand.

In some examples, the future component data 360 uploaded from the vehicle 304-1 to the information repository 352 can omit personal identifying information of users. Alternatively, when future component data is retrieved by the component supply engine 310, personal identifying information can be stripped from the future component data prior to providing the future component data from the information repository 352 to the component supply engine 310.

In some examples, the predictive component provision instructions 302 and/or the synthetic sensor 321 can determine, based on sensor data from physical sensors, a rate at which a vehicle component is deteriorating. Based on this rate, the predictive component provision instructions 302 or synthetic sensor 321 can predict a date of future demand for the vehicle component.

In further examples, the rate at which a vehicle component is deteriorating can be included in the future component data 360 uploaded to the information repository 352. The component supply engine 310 can use the rate of deterioration as an input to predict an estimated date of future demand for the vehicle component.

A storage medium (e.g. 130 in FIG. 1 or 330 in FIG. 3) can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory or other type of non-volatile memory device; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the present disclosure, use of the term "a," "an," or "the" is intended to include the plural forms as well, unless the context clearly indicates otherwise. Also, the term "includes," "including," "comprises," "comprising," "have," or "having" when used in this disclosure specifies the presence of the stated elements, but do not preclude the presence or addition of other elements.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A computer-implemented method comprising:
receiving, from a vehicle (104), vehicle component information (208) indicating one or more vehicle components to be serviced;
accessing (202) service facility information relating to a plurality of vehicle service facilities;
determining, based on the vehicle component information and the service facility information, at least one vehicle service facility of the plurality of vehicle service facilities (210) that is able to perform servicing of the one or more vehicle components; and
causing (212, 214) presentation, in a user interface, of service information relating to vehicle component servicing to be provided by the at least one vehicle service facility;
wherein the vehicle component information from the vehicle is based on sensor data (204) of one or more sensors in the vehicle; and
wherein the vehicle component information from the vehicle indicates the one or more vehicle components to be serviced based on a prediction (206) according to the sensor data;
wherein the prediction is made by a predictive component provision instructions (302) in the vehicle (304-1) based on the sensor data of the one or more sensors in the vehicle, and the prediction comprises a rate at which a vehicle component is deteriorating;
wherein the rate at which a vehicle component is deteriorating is included in a future component data (360);
wherein the future component data (360) provided by the predictive component provision instructions (302) is based on a prediction in the vehicle (304-1) of when and where the one or more vehicle components to be serviced should be provided to the vehicle (304-1).

2. The method of any preceding claim, wherein the vehicle component information from the vehicle relates to a current condition of the vehicle.

3. The method of any preceding claim, wherein the service facility information comprises at least one of:
information of vehicle servicing capabilities of respective vehicle service facilities of the plurality of vehicle service facilities;
bidding strategies of the plurality of vehicle service facilities relating to presentations of service information.

4. The method of any one of claims 1 to 3, wherein the service facility information comprises bidding strategies of the plurality of vehicle service facilities relating to presentations of service information, and wherein the determining of the at least one vehicle service facility comprises identifying, based on the bidding strategies, which of the plurality of vehicle service facilities is to be selected for presentation in the user interface.

5. The method of claim 4, wherein each bidding strategy of the bidding strategies comprises:
a bidding rule including information of which vehicle components a respective vehicle service facility has selected for presentation of service information; or
includes a bid fee to be paid by a respective vehicle service facility when service information is presented for the respective vehicle service facility.

6. The method of any one of claims 4 to 5, wherein the identifying comprises identifying multiple vehicle service facilities of the plurality of vehicle service facilities based on the bidding strategies, and wherein the instructions upon execution cause the system to:
cause presentation, in the user interface, of service information relating to vehicle component servicing to be provided by the multiple vehicle service facilities.

7. The method of claim 6, further comprising:
receiving, based on a user selection in the user interface, a selection of a selected vehicle service facility of the multiple vehicle service facilities to use for the servicing of the one or more vehicle components; and
optionally further comprising:
communicating information relating to the servicing of the one or more vehicle components to a computer of the selected vehicle service facility, without user manual entry.

8. The method of claim 7, further comprising:
receiving, based on user entry in the user interface, scheduling information relating to scheduling a service for the vehicle; and
communicating the scheduling information to a computer of the selected vehicle service facility.

9. The method of any preceding claim, wherein the user interface in which the service information is presented is provided on a display of the vehicle or an electronic device.

10. The method of any preceding claim, wherein the vehicle component information from the vehicle indicates that multiple vehicle components of the vehicle are to be serviced, and wherein the determining of the at least one vehicle service facility to perform servicing of the one or more vehicle components is based on an objective that seeks to combine multiple services into a single service visit.

11. A computer program, which when executed on at least one processor of a computer device, is configured to cause the computing device to carry out the method of claims 1 to 10.

12. The method of claim 1, wherein the predictive component provision instructions (302) determine based on the sensor data from the one or more sensors, a rate at which a vehicle component is deteriorating, and based on the rate, the predictive component provision instructions (302) predicts a date of future demand for the vehicle component.

## Patentansprüche

1. Ein computerimplementiertes Verfahren, das Folgendes beinhaltet:
Empfangen, von einem Fahrzeug (104), von Fahrzeugkomponenteninformationen (208), die eine oder mehrere zu wartende Fahrzeugkomponenten angeben;
Zugreifen (202) auf Wartungseinrichtungsinformationen, die sich auf eine Vielzahl von Fahrzeugwartungseinrichtungen beziehen;
Bestimmen, basierend auf den Fahrzeugkomponenteninformationen und den Wartungseinrichtungsinformationen, mindestens einer Fahrzeugwartungseinrichtung der Vielzahl von Fahrzeugwartungseinrichtungen (210), die in der Lage ist, eine Wartung der einen oder mehreren Fahrzeugkomponenten durchzuführen; und
Bewirken (212, 214) einer Darstellung, in einer Benutzeroberfläche, von Wartungsinformationen, die sich auf eine von der mindestens einen Fahrzeugwartungseinrichtung bereitzustellende Wartung von Fahrzeugkomponenten beziehen;
wobei die Fahrzeugkomponenteninformationen von dem Fahrzeug auf Sensordaten (204) eines oder mehrerer Sensoren in dem Fahrzeug basieren; und
wobei die Fahrzeugkomponenteninformationen von dem Fahrzeug die eine oder mehreren zu wartenden Fahrzeugkomponenten basierend auf einer Vorhersage (206) gemäß den Sensordaten angeben;
wobei die Vorhersage durch prädiktive Komponentenbereitstellungsanweisungen (302) in dem Fahrzeug (304-1) basierend auf den Sensordaten des einen oder der mehreren Sensoren in dem Fahrzeug vorgenommen wird und die Vorhersage eine Rate beinhaltet, mit der sich eine Fahrzeugkomponente verschlechtert;
wobei die Rate, mit der sich eine Fahrzeugkomponente verschlechtert, in zukünftigen Komponentendaten (360) enthalten ist;
wobei die zukünftigen Komponentendaten (360), die durch die prädiktiven Komponentenbereitstellungsanweisungen (302) bereitgestellt werden, auf einer Vorhersage in dem Fahrzeug (304-1) darüber basieren, wann und wo die eine oder mehreren zu wartenden Fahrzeugkomponenten dem Fahrzeug (304-1) bereitgestellt werden sollen.

2. Verfahren gemäß einem der vorhergehenden Ansprüche, wobei sich die Fahrzeugkomponenteninformationen von dem Fahrzeug auf einen aktuellen Zustand des Fahrzeugs beziehen.

3. Verfahren gemäß einem der vorhergehenden Ansprüche, wobei die Wartungseinrichtungsinformationen mindestens eines der Folgenden beinhaltet: Informationen über Fahrzeugwartungsfähigkeiten von jeweiligen Fahrzeugwartungseinrichtungen der Vielzahl von Fahrzeugwartungseinrichtungen; Gebotsstrategien der Vielzahl von Fahrzeugwartungseinrichtungen, die sich auf Darstellungen von Wartungsinformationen beziehen.

4. Verfahren gemäß einem der Ansprüche 1 bis 3, wobei die Wartungseinrichtungsinformationen Gebotsstrategien der Vielzahl von Fahrzeugwartungseinrichtungen beinhalten, die sich auf Darstellungen von Wartungsinformationen beziehen, und wobei das Bestimmen der mindestens einen Fahrzeugwartungseinrichtung ein Identifizieren, basierend auf den Gebotsstrategien, beinhaltet, welche der Vielzahl von Fahrzeugwartungseinrichtungen zur Darstellung in der Benutzeroberfläche auszuwählen ist.

5. Verfahren gemäß Anspruch 4, wobei jede Gebotsstrategie der Gebotsstrategien Folgendes beinhaltet:
eine Gebotsregel, die Informationen darüber umfasst, welche Fahrzeugkomponenten eine jeweilige Fahrzeugwartungseinrichtung zur Darstellung von Wartungsinformationen ausgewählt hat; oder
eine Gebotsgebühr umfasst, die von einer jeweiligen Fahrzeugwartungseinrichtung zu zahlen ist, wenn Wartungsinformationen für die jeweilige Fahrzeugwartungseinrichtung dargestellt werden.

6. Verfahren gemäß einem der Ansprüche 4 bis 5, wobei das Identifizieren ein Identifizieren mehrerer Fahrzeugwartungseinrichtungen der Vielzahl von Fahrzeugwartungseinrichtungen basierend auf den Gebotsstrategien beinhaltet und wobei die Anweisungen bei Ausführung das System zu Folgendem veranlassen:
Bewirken einer Darstellung, in der Benutzeroberfläche, von Wartungsinformationen, die sich auf eine von den mehreren Fahrzeugwartungseinrichtungen bereitzustellende Wartung von Fahrzeugkomponenten beziehen.

7. Verfahren gemäß Anspruch 6, das ferner Folgendes beinhaltet:
Empfangen, basierend auf einer Benutzerauswahl in der Benutzeroberfläche, einer Auswahl einer ausgewählten Fahrzeugwartungseinrichtung der mehreren Fahrzeugwartungseinrichtungen zur Verwendung für die Wartung der einen oder mehreren Fahrzeugkomponenten; und
optional ferner beinhaltend:
Übermitteln von Informationen, die sich auf die Wartung der einen oder mehreren Fahrzeugkomponenten beziehen, an einen Computer der ausgewählten Fahrzeugwartungseinrichtung ohne manuelle Benutzereingabe.

8. Verfahren gemäß Anspruch 7, das ferner Folgendes beinhaltet:
Empfangen, basierend auf einer Benutzereingabe in der Benutzeroberfläche, von Planungsinformationen, die sich auf die Planung einer Wartung für das Fahrzeug beziehen; und
Übermitteln der Planungsinformationen an einen Computer der ausgewählten Fahrzeugwartungseinrichtung.

9. Verfahren gemäß einem der vorhergehenden Ansprüche, wobei die Benutzeroberfläche, in der die Wartungsinformationen dargestellt werden, auf einer Anzeige des Fahrzeugs oder einer elektronischen Vorrichtung bereitgestellt wird.

10. Verfahren gemäß einem der vorhergehenden Ansprüche, wobei die Fahrzeugkomponenteninformationen von dem Fahrzeug angeben, dass mehrere Fahrzeugkomponenten des Fahrzeugs zu warten sind, und wobei das Bestimmen der mindestens einen Fahrzeugwartungseinrichtung, um eine Wartung der einen oder mehreren Fahrzeugkomponenten durchzuführen, auf einem Ziel basiert, das darauf abzielt, mehrere Wartungen in einem einzigen Wartungsbesuch zu kombinieren.

11. Ein Computerprogramm, das, wenn es auf mindestens einem Prozessor einer Computervorrichtung ausgeführt wird, konfiguriert ist, um die Rechenvorrichtung zu veranlassen, das Verfahren gemäß den Ansprüchen 1 bis 10 durchzuführen.

12. Verfahren gemäß Anspruch 1, wobei die prädiktiven
Komponentenbereitstellungsanweisungen (302) basierend auf den Sensordaten des einen oder der mehreren Sensoren eine Rate bestimmen, mit der sich eine Fahrzeugkomponente verschlechtert, und basierend auf der Rate die prädiktiven Komponentenbereitstellungsanweisungen (302) ein Datum eines zukünftigen Bedarfs für die Fahrzeugkomponente vorhersagen.

## Revendications

1. Un procédé mis en œuvre par ordinateur comprenant :
recevoir, en provenance d'un véhicule (104), des informations de composant de véhicule (208) indiquant un ou plusieurs composants de véhicule devant être entretenus ;
accéder (202) à des informations de centre d'entretien relatives à une pluralité de centres d'entretien de véhicules ;
déterminer, sur la base des informations de composant de véhicule et des informations de centre d'entretien, au moins un centre d'entretien de véhicules parmi la pluralité de centres d'entretien de véhicules (210) qui est capable d'effectuer l'entretien des un ou plusieurs composants de véhicule ; et
amener (212, 214) la présentation, dans une interface utilisateur, d'informations d'entretien relatives à l'entretien de composant de véhicule à fournir par l'au moins un centre d'entretien de véhicules ;
dans lequel les informations de composant de véhicule provenant du véhicule sont basées sur des données de capteur (204) d'un ou de plusieurs capteurs dans le véhicule ; et
dans lequel les informations de composant de véhicule provenant du véhicule indiquent les un ou plusieurs composants de véhicule devant être entretenus sur la base d'une prédiction (206) selon les données de capteur ;
dans lequel la prédiction est faite par des instructions de fourniture prédictive de composant (302) dans le véhicule (304-1) sur la base des données de capteur des un ou plusieurs capteurs dans le véhicule, et la prédiction comprend une vitesse à laquelle un composant de véhicule se détériore ;
dans lequel la vitesse à laquelle un composant de véhicule se détériore est incluse dans des données de composant futur (360) ;
dans lequel les données de composant futur (360) fournies par les instructions de fourniture prédictive de composant (302) sont basées sur une prédiction dans le véhicule (304-1) du moment et de l'endroit où les un ou plusieurs composants de véhicule devant être entretenus doivent être fournis au véhicule (304-1).

2. Le procédé de n'importe quelle revendication précédente, dans lequel les informations de composant de véhicule provenant du véhicule concernent un état actuel du véhicule.

3. Le procédé de n'importe quelle revendication précédente, dans lequel les informations de centre d'entretien comprennent au moins un élément parmi :
des informations de capacités d'entretien de véhicules de centres d'entretien de véhicules respectifs de la pluralité de centres d'entretien de véhicules ;
des stratégies d'enchères de la pluralité de centres d'entretien de véhicules relatives à des présentations d'informations d'entretien.

4. Le procédé de l'une quelconque des revendications 1 à 3, dans lequel les informations de centre d'entretien comprennent des stratégies d'enchères de la pluralité de centres d'entretien de véhicules relatives à des présentations d'informations d'entretien, et dans lequel déterminer l'au moins un centre d'entretien de véhicules comprend identifier, sur la base des stratégies d'enchères, lequel de la pluralité de centres d'entretien de véhicules doit être sélectionné pour présentation dans l'interface utilisateur.

5. Le procédé de la revendication 4, dans lequel chaque stratégie d'enchères des stratégies d'enchères comprend :
une règle d'enchères incluant des informations quant à quel composant de véhicule un centre d'entretien de véhicules respectif a sélectionné pour présentation d'informations d'entretien ; ou
inclut un montant de l'enchère à payer par un centre d'entretien de véhicules respectif lorsque des informations d'entretien sont présentées pour le centre d'entretien de véhicules respectif.

6. Le procédé de l'une quelconque des revendications 4 à 5, dans lequel identifier comprend identifier de multiples centres d'entretien de véhicules parmi la pluralité de centres d'entretien de véhicules sur la base des stratégies d'enchères, et dans lequel les instructions, lors de leur exécution, amènent le système à :
amener la présentation, dans l'interface utilisateur, d'informations d'entretien relatives à l'entretien de composant de véhicule que les multiples centres d'entretien de véhicules doivent fournir.

7. Le procédé de la revendication 6, comprenant en outre :
recevoir, sur la base d'une sélection utilisateur dans l'interface utilisateur, une sélection d'un centre d'entretien de véhicules sélectionné parmi les multiples centres d'entretien de véhicules à utiliser pour l'entretien des un ou plusieurs composants de véhicule ; et
comprenant en outre facultativement :
communiquer des informations relatives à l'entretien des un ou plusieurs composants de véhicule à un ordinateur du centre d'entretien de véhicules sélectionné, sans entrée manuelle utilisateur.

8. Le procédé de la revendication 7, comprenant en outre :
recevoir, sur la base d'une entrée utilisateur dans l'interface utilisateur, des informations de planification relatives à la planification d'un entretien pour le véhicule ; et
communiquer les informations de planification à un ordinateur du centre d'entretien de véhicules sélectionné.

9. Le procédé de n'importe quelle revendication précédente, dans lequel l'interface utilisateur dans laquelle les informations d'entretien sont présentées est fournie sur un écran du véhicule ou d'un dispositif électronique.

10. Le procédé de n'importe quelle revendication précédente, dans lequel les informations de composant de véhicule provenant du véhicule indiquent que de multiples composants de véhicule du véhicule doivent être entretenus, et dans lequel déterminer l'au moins un centre d'entretien de véhicules pour effectuer l'entretien des un ou plusieurs composants de véhicule est basé sur un objectif qui cherche à combiner de multiples entretiens en une visite d'entretien unique.

11. Un programme informatique qui, lorsqu'il est exécuté sur au moins un processeur d'un dispositif informatique, est configuré pour amener le dispositif informatique à réaliser le procédé des revendications 1 à 10.

12. Le procédé de la revendication 1, dans lequel les instructions de fourniture prédictive de composant (302) déterminent, sur la base des données de capteur provenant des un ou plusieurs capteurs, une vitesse à laquelle un composant de véhicule se détériore, et sur la base de la vitesse, les instructions de fourniture prédictive de composant (302) prédisent une date de demande future pour le composant de véhicule.
